# EUROPÄISCHE PATENTSCHRIFT

(11) **EP 1 233 321 B1**
(45) Veröffentlichungstag und Bekanntmachung des Hinweises auf die Patenterteilung: **08.11.2006**
(21) Anmeldenummer: 02003379.1
(22) Anmeldetag: 14.02.2002
(51) Int. Cl.: G05G 1/14

(54) **Pedal**
Pedal
Pédale

(30) Priorität: 14.02.2001 DE 10106710
(43) Veröffentlichungstag der Anmeldung: 21.08.2002
(73) Patentinhaber: SIEMENS AKTIENGESELLSCHAFT, 80333 München (DE)
(72) Erfinder: Kohlen, Peter, 61267 Neu-Anspach (DE); Wehner, Andreas, 61389 Schmitten (DE)

(56) Entgegenhaltungen:
- DE-A- 4 040 151
- DE-A- 19 927 618
- FR-A- 2 796 012

## Beschreibung

Die Erfindung betrifft ein Pedal, insbesondere ein Fahrpedal für ein Kraftfahrzeug, mit einem Pedalarm, welcher an seinem ersten Endbereich von einer Kraft, insbesondere einer Fußkraft, auslenkbar und an seinem zweiten Endbereich um eine Schwenkachse schwenkbar ist, wobei die Schwenkachse in einem Gehäuse mittels eines Lagers angeordnet ist.

Pedale der oben genannten Art werden heute vielfach als Fahrpedale bei Kraftfahrzeugen zur Steuerung der Geschwindigkeit eingesetzt. Hierbei lenkt beim Betrieb des Kraftfahrzeugs der Fahrer des Kraftfahrzeugs den Pedalarm des Pedals mittels Fußkraft aus, um eine bestimmte Geschwindigkeit des Kraftfahrzeugs zu erreichen. Die Auslenkung des Pedalarms ist dabei üblicherweise an eine Steuereinheit gekoppelt, über die die Geschwindigkeit des Kraftfahrzeugs einstellbar ist. Allgemein gilt: je größer die Auslenkung des Pedalarms, desto größer die Geschwindigkeit des Kraftfahrzeugs.

Zur Steuerung der Geschwindigkeit des Kraftfahrzeugs ist das Pedal üblicherweise mechanisch oder elektronisch an eine Drosselklappe oder eine Diesel-Einspritzpumpe gekoppelt, über die die dem Vergaser zuzuführende Frischgasmenge bzw. Dieselmenge einstellbar ist. Bei einer mechanischen Kopplung zwischen dem Fahrpedal und der Drosselklappe bzw. der Diesel-Einspritzpumpe weist das niechanische System mit mehreren bewegten Elementen Reibung auf. Dadurch wird es dem Fahrer des Kraftfahrzeugs erleichtert, die Pedalstellung bei einer Relativbeschleunigung zwischen dem Kraftfahrzeug und dem Fuß annähernd konstant zu halten. Dies gilt insbesondere bei Ruck- und Stoßbewegungen, die auf Schlechtwegstrecken auftreten können. Hierdurch wird die Muskulatur des Fußes des Fahrers des Kraftfahrzeugs bei längeren Fahrten mit annähernd konstanter Pedalstellung entlastet.

Bei einer elektronischen Kopplung zwischen dem Fahrpedal und der Drosselklappe bzw. der Diesel-Einspritzpumpe ist über einen in dem Fahrpedal integrierten Sollwertgeber der Drosselklappe eine bestimmte Position vorgebbar bzw. der Diesel-Einspritzpumpe eine bestimmte Dieselmenge zuweisbar. Aufgrund der fehlenden mechanischen Ankopplung entfällt jedoch die bisher bei den mechanischen Systemen vorhandene mechanische Hysterese.

Um nun auch bei einer elektronischen Kopplung zwischen dem Pedal und dem Drosselklappenstutzen ein Aufschwingen des Fahrerfußes besonders zuverlässig zu verhindern, ist üblicherweise in ein derartiges Pedal mechanisch eine Reibung des Pedals eingebaut, die jedoch in keiner Weise an den Drosselklappenstutzen des Kraftfahrzeugs bzw. die Diesel-Einspritzpume gekoppelt ist.

Bei der Montage des Pedals wird in dem Gehäuse des Pedals die Schwenkachse mittels Lagern schwenkbar angeordnet. Üblicherweise werden zunächst die Lager der Schwenkachse und der Pedalarm in das Gehäuse eingebracht. Anschließend wird die Schwenkachse durch die Lager und eine Bohrung des Pedalarms hindurch geführt. Die Fixierung der Welle in dem Gehäuse erfolgt beispielsweise über eine Presspassung oder durch einen Sicherungsstift. Diese Montageweise erweist sich als besonders aufwendig aufgrund der Vielzahl der auszuführenden Montageschritte.

Eine solche Montage ist z.B. aus der FR2796012 bekannt.

Der Erfindung liegt daher die Aufgabe zugrunde, ein Pedal der o.g. Art anzugeben, das eine besonders geringe Anzahl von Bauteilen aufweist und besonders einfach zu montieren ist.

Diese Aufgabe wird erfindungsgemäß dadurch gelöst, daß in dem Gehäuse das Lager über einen Bund axial gesichert ist.

Die Erfindung geht dabei von oder Überlegung aus, daß ein Pedal, das besonders wenig Bauteile aufweist und besonders einfach zu montieren ist, eine besonders geringe Anzahl an Montageschritten und Bauteilen aufweisen sollte. Gleichzeitig sollte das Pedal jedoch eine besonders hohe Stabilität und damit verbunden eine besonders lange Lebensdauer aufweisen. Die Schwenkachse sollte dabei jedoch, um besonders gute Schwenkeigenschaften aufzuweisen, mittels Lager in dem Gehäuse des Pedals angeordnet sein. Dabei sollten die Lager mit besonders geringem Aufwand in dem Gehäuse anzuordnen sein. Ein zusätzlicher Montageschritt könnte entfallen, wenn die Lager beim Einsetzen in das Gehäuse in dem Gehäuse axial sicherbar wären. Dann wäre auch ein Sicherungsstift oder eine Presspassung der Lager verzichtbar. Hierzu weist das Gehäuse eine Tasche auf und das Lager einen Bund auf. Zur Befestigung des Lagers in dem Gehäuse ist der Bund des Lagers in der Tasche des Gehäuses anzuordnen.

Vorteilhafterweise ist das Lager überwiegend aus Kunststoff gefertigt. Aus Kunststoff hergestellte Lager lassen sich besonders einfach herstellen und zudem in besonders einfacher Weise durch Spritzgußtechnik mit einem Bund versehen.

Vorteilhafterweise weist das Lager zum Einbringen in das Gehäuse einen Schlitz auf. Hierdurch ist das Lager mittels eines Montagewerkzeugs, beispielsweise einen Schraubendreher, in besonders einfacher Weise in das Gehäuse des Pedals einbringbar.

Vorteilhafterweise umschließt der Bund den Umfang des Lager weniger als 180°. Hierdurch ist ein ausreichender Halt des Bunds in der Tasche des Gehäuses zuverlässig gewährleistet.

Der Pedalarm weist vorteilhafterweise an seinem zweiten Endbereich einen Wellenstumpf auf, der zumindest teilweise die Schwenkachse bildet. Wird schon bei der Herstellung des Pedalarms an den zweiten Endbereich des Pedalarms ein Wellenstumpf angeformt, so entfällt bei der Montage des Pedals das Zusammenfügen von Welle und Pedalarm. Der Wellenstumpf kann hierbei durch einen Schlitz in dem Gehäuse des Pedals in das Gehäuse des Pedals eingeführt werden. Hierdurch fällt der für das Pedal erforderliche Montageaufwand zusätzlich besonders gering aus.

Vorteilhafterweise weist zur Anordnung des am zweiten Endbereich des Pedalarms angeordneten Wellenstumpfs in dem Gehäuse das Gehäuse einen Schlitz auf. Hierdurch ist der Pedalarm in besonders einfacher Weise im Gehäuse zu montieren.

Die mit der Erfindung erzielten Vorteile liegen insbesondere darin, daß die Welle mittels Lager aktiv in dem Gehäuse gesichert ist. Hierdurch fallen die für das Pedal erforderlichen Montageschritte geringer aus, als dies der Fall wäre, wenn die Lager separat mittels eines Sicherungsstifts oder einer Presspassung in dem Gehäuse anzuordnen wären.

Ein Ausführungsbeispiel der Erfindung wird anhand einer Zeichnung näher erläutert. Darin zeigen die Figuren:
- Fig. 1: schematisch eine Ansicht des Pedals,
- Fig. 2: schematisch das Gehäuse des Pedals von unten,
- Fig.3: schematisch den zweiten Endbereich des Pedalarms mit angespritzten Wellenstümpfen,
- Fig. 4: schematisch ein Lager und
- Fig. 5: schematisch ein in dem Gehäuse angeordnetes Lager.

Einander entsprechende Teile sind in allen Figuren mit den gleichen Bezugszeichen versehen.

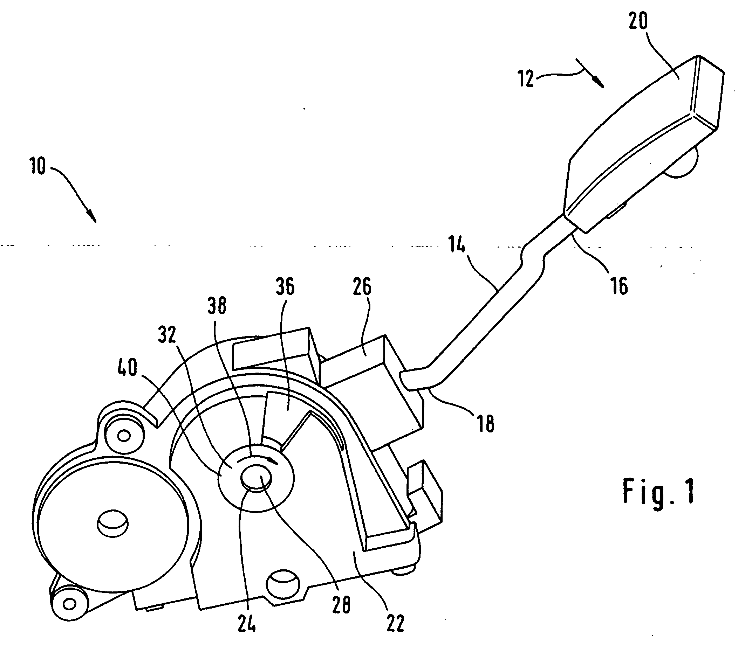

Das Pedal 10 gemäß Figur 1 ist als Fahrpedal eines Kraftfahrzeugs ausgebildet und durch eine Kraft 12, insbesondere eine Fußkraft, eines Fahrers zu betätigen. Mit der Betätigung des Pedals 10 steuert der Fahrer die Geschwindigkeit des Kraftfahrzeugs. Der Fahrer und das Kraftfahrzeug sind in der Zeichnung nicht näher dargestellt. Das Pedal ist zur Steuerung der Geschwindigkeit des Kraftfahrzeugs in nicht näher dargestellter Weise über eine Steuereinheit mit einem Leistungsstellglied des kraftfahrzeugs verbunden

Das Pedal 10 umfaßt einen Pedalarm 14 mit einem ersten Endbereich 16 und einem zweiten Endbereich 18. Der erste Endbereich 16 des Pedalarms 14 weist eine Pedalplatte 20 auf, die von der Kraft 12 des nicht näher dargestellten Fahrers des ebenfalls nicht näher dargestellten Kraftfahrzeugs betätigbar ist. Der Pedalarm 14 ist von einem Rückstellfederelement zurückschwenkbar in eine Grundstellung beaufschlagt, das in der Zeichnung nicht näher dargestellt ist. Der zweite Endbereich 20 des Pedalarms 14 ist mittels einer in einem Gehäuse 22 gelagerten Schwenkachse 24 schwenkbar gelagert. Hierfür ist der zweite Endbereich 18 des Pedalarms 14 an einem Pedalkopf 26 angeordnet, der die Schwenkachse 24 umschließt. Zur Befestigung des zweiten Endbereichs 18 des Pedalarms 14 in dem Pedalkopf 26 weist der Pedalkopf 26 ein in der Figur 1 nicht näher dargestelltes Gewinde auf, in das der zweite Endbereich 18 des Pedalarms 14 eingeschraubt ist. Zusätzlich ist der zweite Endbereich 18 des Pedalarms 14 fest mit dem Pedalkopf 26 verklebt.

An dem Pedalkopf 26 sind Achsstümpfe 28 angeordnet, die seitlich aus dem Gehäuse 22 hervorragen und die Schwenkachse 24 bilden. Die an dem Pedalkopf 26 angeordneten Achsstümpfe 28 sind in Lagern 32 in dem Gehäuse 22 schwenkbar gelagert und axial gesichert. Zur Anordnung der Lager 32 in dem Gehäuse 22 des Pedals 10 weisen die Lager 32 jeweils einen Bund 34 auf, der in der Darstellung gemäß Figur 1 in einer Tasche 36 angeordnet und daher in Figur 1 nicht zu sehen ist. Bei der Anordnung der Lager 32 in dem Gehäuse 22 wird der Bund 34 des jeweiligen Lagers entlang der durch den Pfeil 38 gekennzeichneten Richtung in die dafür vorgesehene Tasche 36 des Gehäuses 22 gedreht, wodurch eine Sicherung der Lager 32 in dem Gehäuse 22 erfolgt.

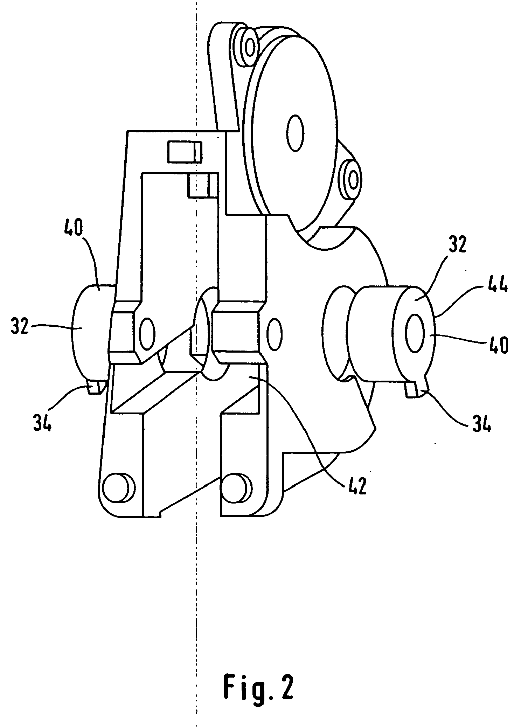

Ein Unteransicht des Gehäuses 22 zeigt schematisch Figur 2. Die Lager 32 sind noch nicht in das Gehäuse 22 eingebracht, so daß der Bund 34 des jeweiligen Lagers 32 sichtbar ist. Auch zeigt diese Darstellung Öffnungen 42 des Gehäuses 22, über die die an dem Pedalarm 14 angeordneten Wellenstümpfe 28 in das Gehäuse einbringbar sind.

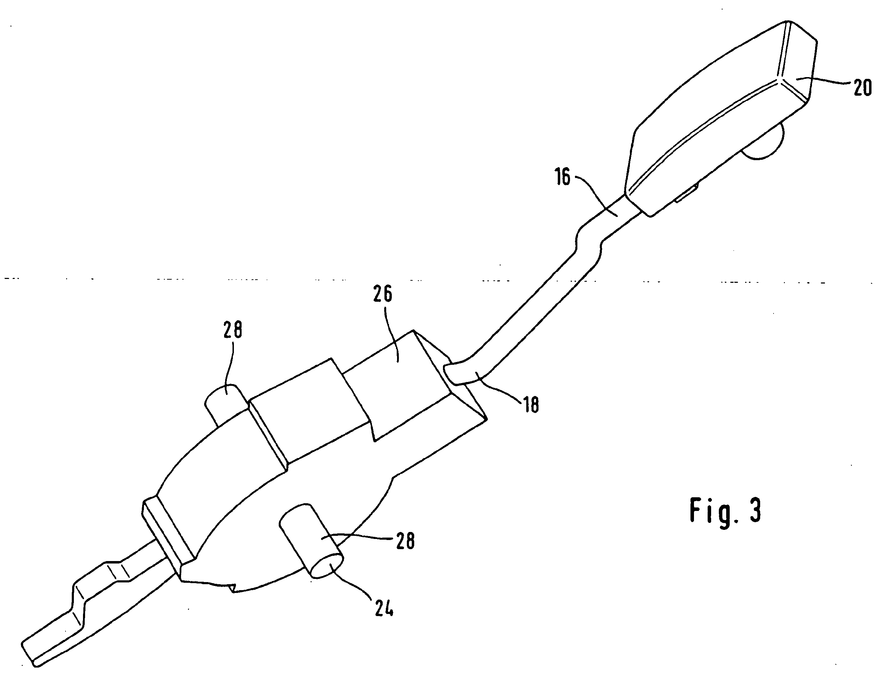

Den Pedalkopf 26 mit Achsstümpfen 28 zeigt Figur 3 schematisch. Die Wellenstümpfe 28 sind dabei einstückig mit dem Pedalkopf 26 im Spritzgußverfahren hergestellt worden. Der Pedalkopf 26 und die Achsstümpfe 28 sind aus Kunststoff 40. Sie können alternativ jedoch auch aus Aluminium im Druckgußverfahren hergestellt werden. In den Pedalkopf 26 ist in nicht näher dargestellter Weise der zweite Endbereich 18 des Pedalarms 14 eingeschraubt. An dem ersten Endbereich 16 des Pedalarms 14 ist die Pedalplatte 20 angeordnet.

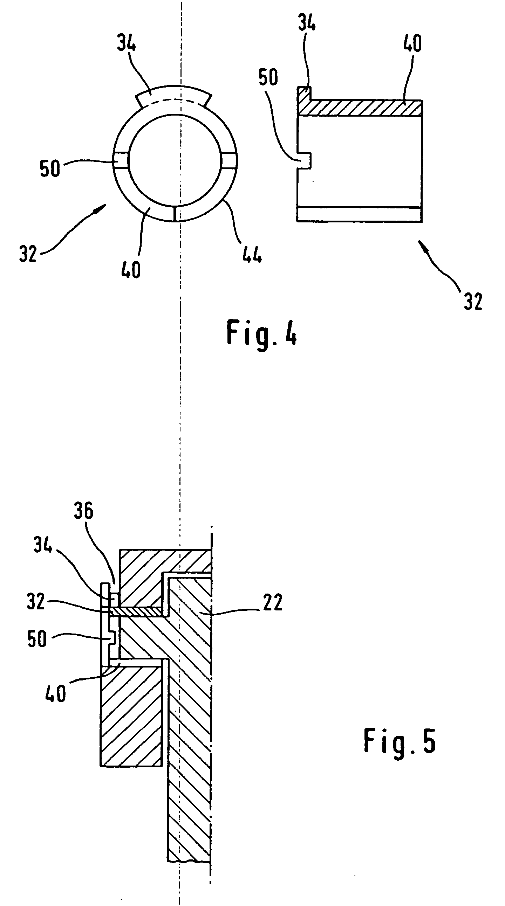

Eine schematische Darstellung eines der beiden Lager 32 zeigt Figur 4. Dabei ist das Lager 32 sowohl in Draufsicht, auf der linken Seite, und im Schnitt, auf der rechten Seite, dargestellt. Deutlich erkennbar ist, daß das Lager 32 einen Bund 34 aufweist, der radial hervorstehende und weniger als 180° des Umfangs 44 des Lagers 32 umschließt. Der Bund 34 des Lagers 32 erstreckt sich dabei nicht über die gesamte Länge 46 des Lagers 32. Der Bund 34 des Lagers 32 erstreckt sich gerade soweit entlang der Länge 46 des Lagers 32, wie es aus Stabilitätsgründen zur Befestigung des Lagers 32 in der Tasche 36 des Gehäuses 22 erforderlich ist.

Eine schematische Darstellung des Gehäuses 22 mit einem in dem Gehäuse 22 angeordneten Lager 32 zeigt Figur 5. Zu sehen ist der Bund 34 des Lagers 32, der in der Tasche 36 des Gehäuses 22 angeordnet ist. Deutlich erkennbar sind in Figur 5 Schlitze 50 des Lagers 32. Über die Schlitze 50 ist ein Montagewerkzeug an dem Lager 32 ansetzbar, um es in die Tasche 36 des Gehäuses 22 zu verdrehen. Bei dem Montagewerkzeug kann es sich hierbei um einen Schraubendreher oder auch um ein speziell an das Lager angepaßtes Montagewerkzeug handeln.

Das Pedal 10 ist mit besonders geringen Aufwand montierbar. Bei der Montage des Pedals 10 wird zunächst der Pedalkopf 26 mit den angeformten Wellenstümpfen 28 in das Gehäuse durch die Öffnungen 42 des Gehäuses 22 eingeführt. Anschließend werden die Lager 32 beidseitig der Wellenstümpfe 28 in das Gehäuse 22 eingeführt. Es erfolgt dann ein Verdrehen der beiden Lager 32 mittels eines Montagewerkzeugs. Die Bünde 34 der Lager 32 werden dabei in ihre jeweilige Tasche 36 des Gehäuses 22 verdreht. Dieser Vorgang entspricht einer aktiven axialen Sicherung der Lager 32 in dem Gehäuse 22. Die radiale Sicherung der Lager 32 erfolgt über Übergangspassung oder alternativ durch Verwendung eines geschlitzten Lagers.

Der Bund 34 der Lager 32 ermöglicht eine aktive axiale Sicherung der Lager 32 in dem Gehäuse 22 des Pedals 10. Hierdurch sind die Lager 32 in besonders einfacher Weise in den Gehäusetaschen 36 des Gehäuses 22 anzuordnen. Hierdurch weist das Pedal 10 einen besonders geringen Montageaufwand auf.

## Patentansprüche

1. Pedal (10), insbesondere ein Fahrpedal für ein Kraftfahrzeug, mit einem Pedalarm (14), welcher ab seinem ersten Endbereich (16) von einer Kraft (12), insbesondere einer Fußkraft, auslenkbar und an seinem zweiten Endbereich (18) um eine eine Drehachse aufweisende Schwenkachse (24) schwenkbar ist, wobei die Schwenkachse (24) annähernd senkrecht zu dem Pedalarm (14) angeordnet und über zumindest ein Lager (32) in einem Gehäuse (22) gelagert ist, **dadurch gekennzeichnet, daß** das Gehäuse (22) zum Anordnen des zumindest einen Lagers (32) in dem Gehäuse (22) zumindest eine taschenartige Haltevorrichtung aufweist und das Lager (32) zumindest einen den Umfang (44) des Lagers (32) weniger als 180 ° umschließenden Bund (34) aufweist, wobei zur Sicherung des zumindest einen Lagers (32) in dem Gehäuse (22) das zumindest eine Lager (32) auf den Endbereich (18) der Schwenkachse (24) aufschiebbar und über eine Drehbewegung des zumindest einen Lagers (32) um die Drehachse der Schwenkachse (24) der zumindest eine Bund (34) des Lagers (32) in der taschenartigen Haltevorrichtung des Gehäuses (22) anzuordnen ist.

2. Pedal (10) nach Anspruch 1, **dadurch gekennzeichnet, daß** das Lager (32) überwiegend aus Kunststoff (40) gefertigt ist.

3. Pedal (10) nach Anspruch 1 oder 2, **dadurch gekennzeichnet, daß** das Lager (32) zum Einbringen in das Gehäuse (22) einen radialen Schlitz (50) aufweist.

4. Pedal (10) nach einem der Ansprüche 1 bis 3, **dadurch gekennzeichnet, daß** der Pedalarm (14) an seinem zweiten Endbereich (18) einen Wellenstumpf (28) aufweist, der zumindest teilweise die Schwenkachse (24) bildet.

5. Pedal (10) nach Anspruch 4, **dadurch gekennzeichnet, daß** das Gehäuse (22) zur Anordnung des an dem zweiten Endbereich (18) des Pedalarms (14) angeordneten Wellenstumpfs (28) in dem Gehäuse (22) eine Öffnung (42) aufweist.

## Claims

1. Pedal (10), in particular an accelerator pedal for a motor vehicle, with a pedal arm (14) which may be deflected by a force (12), in particular a foot force, at its first end region (16) and which may be pivoted at its second end region (18) about a pivot shaft (24) comprising a rotational axis, the pivot shaft (24) being arranged approximately perpendicular to the pedal arm (14) and being mounted in a housing (22) via at least one bearing (32), **characterized in that** the housing (22) comprises at least one pocket-like retaining device for arranging the at least one bearing (32) in the housing (22) and the bearing (32) comprises at least one shoulder (34) surrounding the periphery (44) of the bearing (32) by less than 180°, the at least one bearing (32) being able to be slipped onto the end region (18) of the pivot shaft (24) for securing the at least one bearing (32) in the housing (22) and the at least one shoulder (34) of the bearing (32) being able to be arranged in the pocket-like retaining device of the housing (22) via a rotary motion of the at least one bearing (32), about the rotational axis of the pivot shaft (24).

2. Pedal (10) according to Claim 1, **characterized in that** the bearing (32) is substantially made from plastics (40).

3. Pedal (10) according to Claim 1 or 2, **characterized in that** the bearing (32) for insertion into the housing (22) comprises a radial slot (50).

4. Pedal (10) according to one of Claims 1 to 3, **characterized in that** the pedal arm (14) comprises a shaft end (28) at its second end region (18) which at least partially forms the pivot shaft (24).

5. Pedal (10) according to Claim 4, **characterized in that** the housing (22) comprises an aperture (42) for arranging the shaft end (28) in the housing (22), which shaft end is arranged at the second end region (18) of the pedal arm (14).

## Revendications

1. Pédale (10), notamment pédale d'accélération pour véhicule automobile, comportant un bras de pédale (14) qui peut dévier, à sa première extrémité (16), sous l'effet d'une force (12), notamment d'une force exercée par un pied, et qui peut, à sa deuxième extrémité (18), pivoter autour d'un axe de pivotement (24) ayant un axe de rotation, où l'axe de pivotement (24) est disposé dans un boîtier (22) approximativement perpendiculairement au bras de pédale (14) et suspendu au moyen de au moins un palier (32), **caractérisée par le fait que** le boîtier (22) comporte, pour la mise en place du au moins un palier (32) dans le boîtier (22), au moins un système de retenue en genre de poche et que le palier (32) comporte au moins un talon (34) s'étendant sur la périphérie (44) du palier (32) sur moins de 180°, où, pour fixer le au moins un palier (32) dans le boîtier (22), le au moins un palier (32) peut être enfiché sur l'extrémité (18) de l'axe de pivotement (24) et, par l'intermédiaire d'un mouvement de rotation du au moins un palier (32) autour de l'axe de rotation de l'axe de pivotement (24), le au moins un talon (34) du palier (32) est mis en place dans le système de retenue en genre de poche du boîtier (22).

2. Pédale (10) selon la revendication 1, **caractérisée par le fait que** le palier (32) est fabriqué, pour la plus grande part, en matière plastique (40).

3. Pédale (10) selon la revendication 1 ou 2, **caractérisée par le fait que** le palier (32) comporte une fente radiale (50) pour permettre de l'introduire dans le boîtier (22).

4. Pédale (10) selon l'une des revendications 1 à 3, **caractérisée par le fait que** le bras de pédale (14) comporte à sa deuxième extrémité (18) un tronçon d'arbre (28), qui forme au moins partiellement l'axe de pivotement (24).

5. Pédale (10) selon la revendication 4, **caractérisée par le fait que** le boîtier 22 comporte une ouverture (42) pour la mise en place dans le boîtier (22) du tronçon d'arbre (28) disposé sur la deuxième extrémité (18) du bras de pédale (14).
